# EUROPÄISCHE PATENTSCHRIFT

(11) **EP 2 991 887 B1**
(45) Veröffentlichungstag und Bekanntmachung des Hinweises auf die Patenterteilung: **14.06.2017**
(21) Anmeldenummer: 14714287.1
(22) Anmeldetag: 02.04.2014
(51) Int. Cl.: B62D 5/04

(54) **LENKGETRIEBE**
STEERING GEAR
MECANISME DE DIRECTION

(30) Priorität: 03.05.2013 DE 102013104521
(43) Veröffentlichungstag der Anmeldung: 09.03.2016
(73) Patentinhaber: Robert Bosch Automotive Steering GmbH, 73527 Schwäbisch Gmünd (DE)
(72) Erfinder: HAFERMALZ, Jens, 73116 Wäschenbeuren (DE); FÜCHSEL, Dennis, 73525 Schwäbisch Gmünd (DE)
(86) Internationale Anmeldenummer: PCT/EP2014/056575
(87) Internationale Veröffentlichungsnummer: WO 2014/177338

(56) Entgegenhaltungen:
- EP-A1- 0 630 800
- WO-A1-2011/073089
- DE-A1-102008 040 673

## Beschreibung

Die Erfindung betrifft ein Lenkgetriebe für ein Hilfskraftlenksystem eines Kraftfahrzeugs und insbesondere ein Festlager für ein solches Lenkgetriebe.

Bei den meisten Kraftfahrzeugen werden Hilfskraftlenksysteme verbaut, die beim Lenken ein unterstützendes Drehmoment erzeugen und dadurch das von dem Fahrer auf die Lenksäule aufzubringende Lenkmoment reduzieren.

Die bekannten Hilfskraftlenksysteme basieren auf einem Lenkgetriebe, das die Antriebsleistung eines hydraulischen oder elektrischen Antriebs übersetzt und auf die Lenksäule überträgt. Derartige Lenkgetriebe sind regelmäßig in Form eines Schraubwälzgetriebes und insbesondere als Schraubradgetriebe oder Schneckengetriebe ausgebildet, d.h. diese umfassen ein Zahnrad, das direkt oder indirekt mit der Lenkstange verbunden ist, sowie ein damit kämmendes, über eine Ritzelwelle von dem Antrieb angetriebenes Ritzel.

Als problematisch bei derartigen Lenkgetrieben hat sich Getriebespiel gezeigt, das sich aufgrund von Bauteiltoleranzen, unterschiedlicher Wärmedehnung der Getriebeelemente und aufgrund von Verschleiß ausbildet. Insbesondere beim sogenannten Wechsellenken, d.h. bei dem direkt aufeinander folgenden Lenken mit wechselndem Lenkeinschlag, erzeugt ein solches Getriebespiel unerwünschte Geräusche, die aus dem sich abwechselnden Anliegen gegenüberliegender Flanken der Zähne von Ritzel und Zahnrad resultieren.

Bekannt ist, dieses Getriebespiel dadurch zu eliminieren, dass die Ritzelwelle verschwenkbar um eine Achse, die senkrecht zur der Längsachse der Ritzelwelle und in einem Abstand zu dem Verzahnungseingriff von Ritzel und Zahnrad verläuft, gelagert ist und mittels eines oder mehrerer Federelemente gegen das Zahnrad gedrückt wird. Die Verschwenkbarkeit der Ritzelwelle wird dabei in eine der zwei Lagerungen, über die die Ritzelwelle endseitig gelagert ist, integriert. Diese Lagerung wird als "Festlager" bezeichnet. Die Lagerung im Bereich des anderen Endes ist dann mit Spiel ausgeführt (sogenanntes "Loslager"), um die durch die Schwenkbewegung hervorgerufene Auslenkung zu ermöglichen. Das Festlager wird regelmäßig antriebsseitig vorgesehen, während das Loslager an dem freien Ende der Ritzelwelle vorgesehen wird. Das oder die Federelemente zum Andrücken des Ritzels an das Zahnrad sind regelmäßig in das Loslager integriert.

Ein solches Lenkgetriebe ist beispielsweise aus der gattungsgemässen WO 2011/073089 A1 bekannt.

Dort ist vorgesehen, das Wälzlager, das die Ritzelwelle im Bereich des Festlagers aufnimmt, außenseitig in einer Schwenkhülse zu lagern. Die Schwenkhülse umfasst eine Lagerhülse, die das Wälzlager weitgehend spielfrei aufnimmt, und einen Außenring, der weitgehend spielfrei in einer Bohrung eines Gehäuses des Lenkgetriebes gehalten ist, wobei der Außenring und die Lagerhülse über mehrere Stege verbunden sind, die bei einem Verdrehen von Außenring zu Lagerhülse tordiert werden. Die gesamte Schwenkhülse ist einstückig in Form eines Blechbauteils ausgebildet.

Eine zur WO 2011/073089 A1 ähnliche Ausgestaltung eines Lenkgetriebes ist in der bislang unveröffentlichten deutschen Patentanmeldung 10 2012 103 146.0 beschrieben. Dort ist der Schwenkring jedoch als separates Bauteil ausgeführt. Dabei umfasst der Schwenkring einen Innenring sowie einen mit dem Innenring über zwei Torsionsstege verbundenen Außenring. Der Außenring dient zur Lagerung des Festlagers in dem Gehäuse des Lenkgetriebes, während der Innenring zwischen dem Wälzlager und einem radial nach innen umgebogenen Ende der Lagerhülse verspannt ist. Um den Innenring des Schwenkrings in die Lagerhülse einbringen zu können, ist die Lagerhülse an dem entsprechenden längsseitigen Ende mit zwei Längsschlitzen versehen, der der Aufnahme der Torsionsstege dienen.

Nachteilig bei diesem Festlager ist die relativ aufwändige Herstellung (wegen der einzubringenden Längsschlitze) sowie die relativ komplizierte Montage (wegen der erforderlichen exakten Ausrichtung der Lagerhülse relativ zu dem Schwenkring). Zudem wird die Lagerhülse durch die Längsschlitze strukturell geschwächt, was zu einer ungewollten Beweglichkeit des Wälzlagers und damit der Lagerung der Ritzelwelle führen kann..

Ausgehend von diesem Stand der Technik lag der Erfindung die Aufgabe zugrunde, ein verbessertes Lenkgetriebe für ein Hilfskraftlenksystem eines Kraftfahrzeugs anzugeben. Insbesondere sollte ein Lenkgetriebe angegeben werden, dass einfach herzustellen und/oder zu montieren ist.

Diese Aufgabe wird durch ein Lenkgetriebe gemäß dem Patentanspruch 8 mit einem Festlager gemäß dem Patentanspruch 1 gelöst. Vorteilhafte Ausführungsformen des erfindungsgemäßen Festlagers sind Gegenstand der abhängigen Patentansprüche und ergeben sich aus der nachfolgenden Beschreibung der Erfindung.

Der Erfindung liegt der Gedanke zugrunde, die Nachteile, die sich aus der Aufnahme des Innenrings des Schwenkrings innerhalb der Lagerhülse bei dem in der deutschen Patentanmeldung 10 2012 103 146.0 beschriebenen Festlager ergeben, dadurch zu vermeiden, dass der Innenring außenseitig auf der Lagerhülse gelagert wird. Dadurch kann die Lagerhülse eine einfache und insbesondere ungeschlitzte Rohrform aufweisen, die nicht nur kostengünstig herstellbar ist, sondern auch keine besondere Ausrichtung während der Montage erfordert. Um eine möglichst spielfreie Lagerung der Ritzelwelle in dem Festlager zu erreichen, erfordert diese erfindungsgemäße Lösung jedoch, dass die Bewegung der Ritzelwelle möglichst spielfrei von dieser auf das Drehlager und dann über die Lagerhülse auf den Schwenkring übertragen wird. Erfindungsgemäß wird dies durch eine geeignete axial unbewegliche Lagerung des Drehlagers in und des Schwenkrings auf der Lagerhülse erreicht.

Dementsprechend ist ein gattungsgemäßes Festlager für ein Lenkgetriebe, mit einem Drehlager (insbesondere Wälzlager), das eine innere Lagerschale, die zur Aufnahme einer Ritzelwelle des Lenkgetriebes vorgesehen ist, und eine äußere Lagerschale, die in einer Lagerhülse aufgenommen ist, aufweist, sowie mit einem Schwenkring, der einen Außenring sowie einen Innenring aufweist, die über einen oder mehrere Torsionsstege (elastisch) verschwenkbar verbunden sind, wobei der Außenring zur Lagerung des Festlagers in einem Gehäuse des Lenkgetriebes vorgesehen ist, erfindungsgemäß dadurch weitergebildet, dass der Innenring des Schwenkrings außenseitig auf dem Lagerring gelagert und axial festgelegt ist.

In einer bevorzugten Ausgestaltung des erfindungsgemäßen Festlagers kann vorgesehen sein, dass die Lagerhülse einen ersten Längsabschnitt und einen zweiten Längsabschnitt aufweist, wobei der zweite Längsabschnitt einen kleineren Außen- und Innendurchmesser als der erste Längsabschnitt aufweist, so dass zwischen dem ersten und zweiten Längsabschnitt sowohl außen- als auch innenseitig ein Anschlag ausgebildet ist, wobei das Drehlager an dem innenseitigen Anschlag und der Schwenkring an dem außenseitigen Anschlag anliegen.

Dies stellt eine konstruktiv besonders einfache Integration von zwei (Längs-)Anschlägen für das Drehlager sowie den Schwenkring dar. Eine solche Lagerhülse kann besonders bevorzugt durch Umformung aus einem rohrförmigen Halbzeug erzeugt werden, wobei vorzugsweise vorgesehen sein sollte, dass die Lagerhülse mit möglichst konstanter Wandstärke ausgebildet ist. Weiterhin bevorzugt sollte der radial verlaufende Abschnitt der Hülsenwandung, der die Anschläge ausbildet, möglichst senkrecht bezüglich der Längsachse der Lagerhülse ausgerichtet sein.

Neben einer Umformung aus einem rohrförmigen Halbzeug besteht auch die Möglichkeit, die Anschläge durch eine spanende Bearbeitung (insbesondere Drehen) eines rohr- oder stabförmigen Halbzeugs auszubilden. Grundsätzlich besteht auch die Möglichkeit, die Anschläge durch separate Bauteile, z.B. Anschlagringe, die in eine Innen- bzw. Außennut der Lagerhülse eingreifen oder mit der Lagerhülse auf andere Weise verbunden (z.B. verschweißt, verlötet, verklebt) sind, auszubilden.

In einer bevorzugten Ausgestaltung des erfindungsgemäßen Festlagers kann vorgesehen sein, dass ein freies Ende der Lagerhülse, insbesondere des ersten Längsabschnitts, radial nach innen umgeformt ist, um einen Innenkragen auszubilden, der einen (zweiten) (Längs-)Anschlag für das Drehlager ausbildet. Dies stellt eine konstruktiv einfache Realisierung einer beidseitigen längsaxialen Fixierung des Drehlagers dar. Die vollständige längsaxiale Fixierung würde somit durch einen Umformschritt nach dem Einbringen des Drehlagers in die Lagerhülse erfolgen. Alternativ besteht aber auch die Möglichkeit, den endseitigen Anschlag durch ein separates Anschlagelement, z.B. einen Anschlagring, auszubilden.

In entsprechender Weise kann vorteilhafterweise auch vorgesehen sein, dass das dem Schwenkring benachbarte freie Ende der Lagerhülse, insbesondere des zweiten Längsabschnitts, radial nach außen umgeformt ist, um einen Außenkragen auszubilden, der einen (zweiten) (Längs-)Anschlag für den Schwenkring bildet.

Um eine möglichst gleichförmige Übertragung von Axialkräften zwischen dem Schwenkring und der umgeformten Lagerhülse zu erreichen, kann vorteilhafterweise eine zwischen dem Schwenkring und dem Außenkragen angeordnete Ringscheibe vorgesehen sein.

Da mittels des Schwenkrings eine Festlegung der Schwenkachse für die Ritzelwelle erfolgen kann, sollte ein Verdrehen des Schwenkrings nach der Montage des Festlagers in dem Lenkgetriebe nicht mehr möglich sein. Hierzu sollte daher eine Verdrehsicherung für den Schwenkring realisiert werden. Vorteilhafterweise kann dies bei der bevorzugten Umformung zur Ausbildung eines Außenkragens dadurch erreicht werden, dass der Federring und/oder die Ringscheibe (mindestens) einen Vorsprung und/oder (mindestens) eine Vertiefung aufweisen, die mit dem Außenkragen eine formschlüssige Verdrehsicherung ausbilden, indem bei der Umformung Material der Lagerhülse in die Vertiefung oder der Vorsprung in den Außenkragen der Lagerhülse gedrückt wird, wodurch eine formschlüssige Verbindung realisiert wird.

Ein erfindungsgemäßes Lenkgetriebe umfasst zumindest ein Zahnrad, ein mit dem Zahnrad kämmendes Ritzel und eine das Ritzel umfassenden Ritzelwelle, wobei die Ritzelwelle auf der einen Seite des Ritzels in einem erfindungsgemäßen Festlager gelagert ist, das eine Schwenkachse für die Ritzelwelle ausbildet, die quer zur Längsachse der Ritzelwelle liegt, und wobei die Ritzelwelle auf der anderen Seite des Ritzels vorzugsweise in einem Loslager gelagert ist.

Die Erfindung wird nachfolgend anhand eines in den Zeichnungen dargestellten Ausführungsbeispiels näher erläutert.

In den Zeichnungen zeigt:
- Fig. 1:: ein erfindungsgemäßes Lenkgetriebe in einem Längsschnitt;

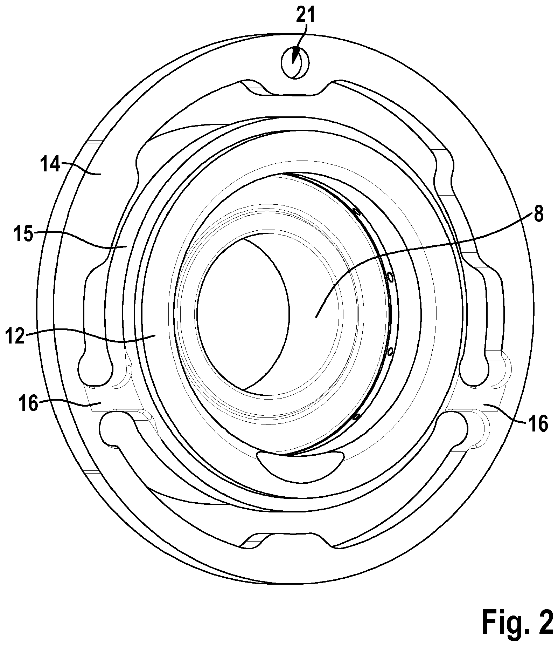

- Fig. 2:: das Festlager des Lenkgetriebes in einer perspektivischen Ansicht;
- Fig. 3:: das Festlager in einer Ansicht von vorne; und
- Fig. 4:: das Festlager in einem Längsschnitt entlang der Schnittebene IV - IV in Fig. 3.

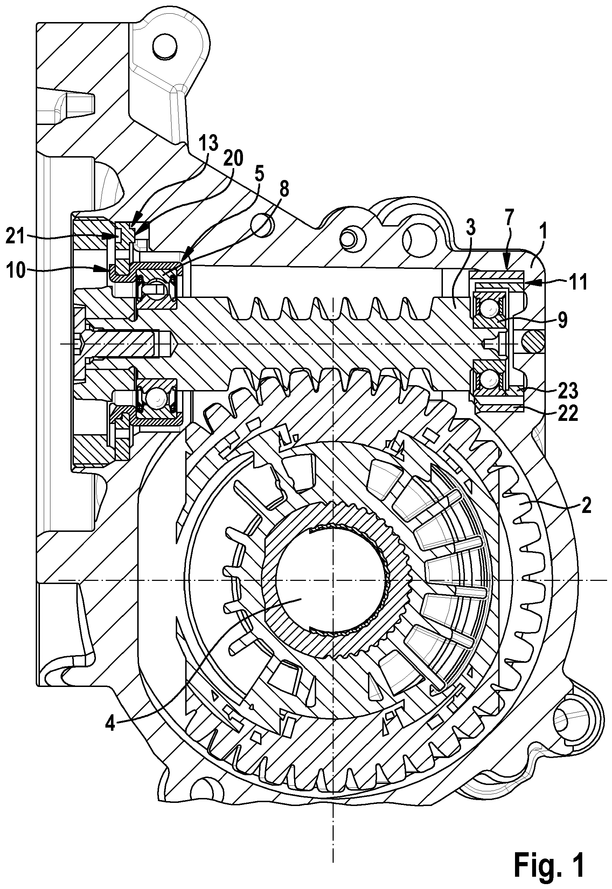

Die Fig. 1 zeigt die wesentlichen Bestandteile einer Ausführungsform eines erfindungsgemäßen Lenkgetriebes. Dieses umfasst ein Gehäuse 1, innerhalb dessen ein Zahnrad 2 sowie ein mit dem Zahnrad 2 kämmendes Ritzel gelagert sind. Ritzel und eine das Ritzel umfassende Ritzelwelle 3 sind in Form einer Schnecke integral ausgebildet.

Das Zahnrad 2 ist fest auf einer Lenksäule 4 oder einer Abtriebswelle des Lenkgetriebes eines Kraftfahrzeugs befestigt.

Die Ritzelwelle 3 weist ein antriebsseitiges Ende auf, über das diese mit der Abtriebswelle eines nicht dargestellten Antriebs (z.B. ein Elektromotor) verbindbar ist. Im Bereich dieses antriebsseitigen Endes ist die Ritzelwelle 3 mittels einer ersten Lagerung in dem Gehäuse 1 gelagert. Diese Lagerung ist als Festlager 5 ausgebildet, das im Wesentlichen keine Translation der Ritzelwelle 3 relativ zu dem Gehäuse 1, jedoch ein Verschwenken um eine Schwenkachse 6 zulässt.

Dieses Verschwenken bewirkt ein Auslenken des dem antriebsseitigen Ende gegenüberliegenden freien Endes der Ritzelwelle 3, das dort mittels eines Loslagers 7 in einer entsprechenden Aufnahme des Gehäuses 1 gelagert ist. Dieses Loslager 7 ist so ausgebildet, dass es die sich aus dem Verschwenken der Ritzelwelle 3 ergebende Auslenkung des freien Endes zulässt.

Sowohl das Festlager 5 als auch das Loslager 7 umfassen jeweils ein Drehlager in Form eines (Kugel-)Wälzlagers 8, 9. In inneren Lagerschalen dieser Wälzlager 8, 9 sind die entsprechenden Abschnitte der Ritzelwelle 3 weitgehend spielfrei gelagert, während äußere Lagerschalen der Wälzlager 8, 9 in jeweils einer Lagervorrichtung 10, 11 gelagert sind, die wiederum weitgehend spielfrei in entsprechenden Aufnahmen des Gehäuses 1 angeordnet sind. Die Lagervorrichtungen 10, 11 sind konstruktiv so ausgebildet, dass diese - im Fall des Festlagers 5 - das Verschwenken der Ritzelwelle 3 um die Schwenkachse 6 und - im Fall des Loslagers 7 - das Auslenken des freien Endes der Ritzelwelle 3 ermöglichen.

Hierzu umfasst die Lagervorrichtung 10 des Festlagers 5 eine Lagerhülse 12 mit kreisförmigem Querschnitt, die in einem ersten Längsabschnitt innenseitig das Wälzlager 8 und in einem zweiten Längsabschnitt außenseitig einen Schwenkring 13 aufnimmt.

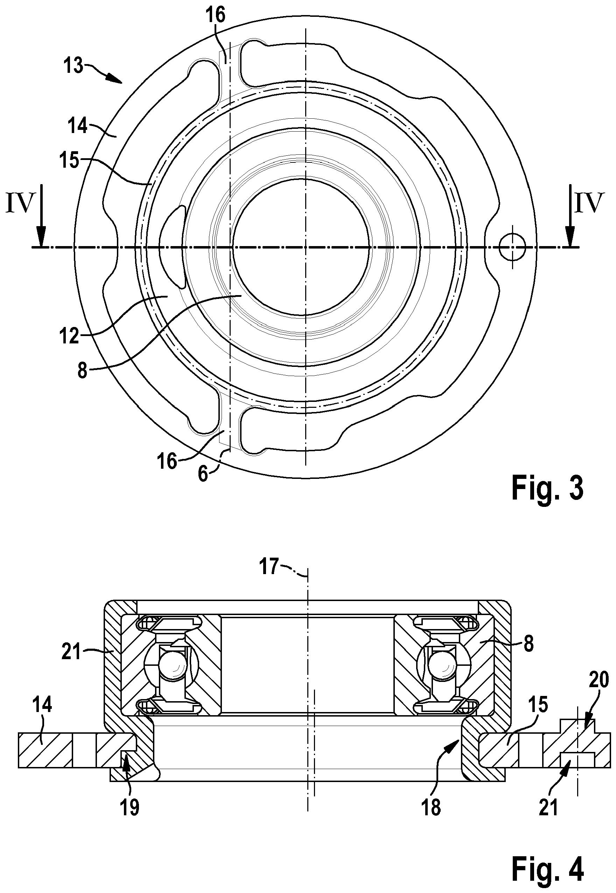

Der Schwenkring 13 umfasst einen Außenring 14 und einen Innenring 15. Der Außenring 14 ist über zwei Torsionsstege 16 mit dem Innenring 15 verbunden. Der Außenring 14, der Innenring 15 und die Torsionsstege 16 sind einstückig aus z.B. Federstahl ausgebildet. Die zwei Torsionsstege 16 verlaufen kollinear und bilden die Schwenkachse 6 aus, um die der Außenring 14 relativ zu dem Innenring 15 verschwenkbar ist. Die Torsionsstege 16 und damit die Schwenkachse 6 verlaufen dabei jedoch nicht durch das Zentrum des Schwenkrings 13 und damit des Ritzelwellenquerschnitts, sondern radial versetzt dazu (vgl. Fig. 3). Die Schwenkachse 6 schneidet somit nicht die Längsachse 17 der Ritzelwelle 3.

Durch den radialen Versatz der Torsionsstege 16 zu dem Zentrum des Schwenkrings 13 wird die Schwenkachse 6 in die Nähe des Außenumfangs der Ritzelwelle 3 verlagert, wodurch die Ausbildung von Reaktionsmomenten, die sich infolge der beim Zahneingriff von Ritzel und Zahnrad 2 ergebenden Verzahnungskräfte in Verbindung mit dem Abstand der Wirkungslinie der Verzahnungskräfte von der Schwenkachse 6 ergeben bzw. ergeben würden, verringert bzw. vermieden werden können. Zur möglichst vollständigen Vermeidung der Reaktionsmomente ist vorgesehen, dass die Schwenkachse 6 innerhalb derjenigen Tangentialebene liegt, die in dem Berührpunkt der beiden Teil- bzw. Wälzkreise von Zahnrad 2 und Ritzel ausgebildet ist.

Sowohl der Innendurchmesser als auch der Außendurchmesser des zweiten Längsabschnitts der Lagerhülse 12 sind kleiner als die entsprechenden Durchmesser des ersten Längsabschnitts. Dadurch wird ein ringförmiger Absatz 18 mit einem exakt radial, d.h. senkrecht zur Längsachse 17 der Lagerhülse 12 (bzw. der Ritzelwelle) verlaufenden Wandabschnitt ausgebildet. Dieser Absatz stellt innenseitig einen ersten (Längs-)Anschlag für das Wälzlager 8 und außenseitig einen ersten (Längs-)Anschlag für den Innenring 15 des Schwenkrings 13 dar. Zur weitgehend unbeweglichen längsaxialen Fixierung des Wälzlagers 8 und des Schwenkrings 13 in bzw. auf der Lagerhülse 12 ist zudem jeweils ein zweiter (Längs-)Anschlag vorgesehen. Diese zweiten Anschläge werden von den umgeformten, radial verlaufenden freien Enden der Lagerhülse 12 ausgebildet. Das dem Wälzlager 8 benachbart liegende freie Ende ist dabei radial nach innen verlaufend ausgerichtet, während das dem Schwenkring 13 benachbarte freie Ende radial nach außen verlaufend ausgerichtet ist. Das Umformen der freien Enden der Lagerhülse 12 erfolgt, nachdem das Wälzlager 8 in diese eingeschoben und der Schwenkring 13 auf diese aufgeschoben wurde.

Zwischen dem Innenring 15 des Schwenkrings 13 sowie der Lagerhülse 12 ist eine Verdrehsicherung vorgesehen. Diese ist in Form einer Vertiefung 19 in dem Innenring 15 des Schwenkrings 13 ausgebildet. In diese wird Material der Lagerhülse 12 beim Umformen des entsprechenden freien Endes gedrückt, wodurch eine formschlüssige Verbindung zur Verhinderung einer Relativdrehung zwischen der Lagerhülse 12 und dem Schwenkring 13 ausgebildet wird.

Am Außenring 14 des Schwenkrings 13 ist eine Nase 20 und auf der Gegenseite eine entsprechende Vertiefung 21 ausgebildet. Diese dienen der eindeutigen Positionierung des Schwenkrings 13 sowie der damit verdrehsicher verbundenen Lagerhülse 12 in dem Gehäuse 1. Das Gehäuse 1 weist hierzu eine entsprechende Gegenkontur auf.

### Bezugszeichenliste

- 1: Gehäuse
- 2: Zahnrad
- 3: Ritzelwelle
- 4: Lenksäule bzw. Abtriebswelle
- 5: Festlager
- 6: Schwenkachse
- 7: Loslager
- 8: Wälzlager des Festlagers
- 9: Wälzlager des Loslagers
- 10: Lagervorrichtung des Festlagers
- 11: Lagervorrichtung des Loslagers
- 12: Lagerhülse
- 13: Schwenkring
- 14: Außenring
- 15: Innenring
- 16: Torsionssteg
- 17: Längsachse der Lagerhülse und der Ritzelwelle
- 18: Absatz
- 19: Vertiefung
- 20: Nase
- 21: Vertiefung

## Patentansprüche

1. Festlager (5) für ein Lenkgetriebe mit einem Drehlager, das eine innere Lagerschale, die zur Aufnahme einer Ritzelwelle (3) des Lenkgetriebes vorgesehen ist, und eine äußere Lagerschale, die in einer Lagerhülse (12) aufgenommen ist, umfasst, sowie mit einem Schwenkring (13), der einen Außenring (14) sowie einen Innenring (15) aufweist, die über einen oder mehrere Torsionsstege (16) verschwenkbar verbunden sind, wobei der Außenring (14) zur Lagerung des Festlagers (5) in einem Gehäuse (1) des Lenkgetriebes vorgesehen ist, **dadurch gekennzeichnet, dass** der Innenring (15) des Schwenkrings (13) außenseitig auf der Lagerhülse (12) gelagert und axial fixiert ist.

2. Festlager (5) gemäß Anspruch 1, **dadurch gekennzeichnet,** die Lagerhülse (12) einen ersten Längsabschnitt und einen zweiten Längsabschnitt aufweist, wobei der zweite Längsabschnitt einen kleineren Außen- und Innendurchmesser als der erste Längsabschnitt aufweist, so dass zwischen dem ersten und dem zweiten Längsabschnitt sowohl außen- als auch innenseitig ein Anschlag ausgebildet ist, wobei das Drehlager an dem innenseitigen Anschlag und der Schwenkring (13) an dem außenseitigen Anschlag anliegen.

3. Festlager (5) gemäß Anspruch 1 oder 2, **dadurch gekennzeichnet, dass** die Lagerhülse (12) rohrförmig mit konstanter Wandstärke ausgebildet ist.

4. Festlager (5) gemäß einem der vorhergehenden Ansprüche, **dadurch gekennzeichnet, dass** ein freies Ende der Lagerhülse (12) radial nach innen umgeformt ist, um einen Innenkragen auszubilden, der einen Anschlag für das Drehlager ausbildet.

5. Festlager (5) gemäß einem der vorhergehenden Ansprüche, **dadurch gekennzeichnet, dass** ein freies Ende der Lagerhülse (12) radial nach außen umgeformt ist, um einen Außenkragen auszubilden, der einen Anschlag für den Schwenkring (13) ausbildet.

6. Festlager (5) gemäß Anspruch 5, **gekennzeichnet durch** eine zwischen dem Schwenkring (13) und dem Außenkragen angeordnete Ringscheibe.

7. Festlager (5) gemäß Anspruch 5 oder 6, **dadurch gekennzeichnet, dass** der Schwenkring (13) und/oder die Ringscheibe einen Vorsprung und/oder eine Vertiefung (19) aufweisen, die mit dem Außenkragen eine formschlüssige Verdrehsicherung ausbilden.

8. Lenkgetriebe mit einem Zahnrad (2), einem damit kämmenden Ritzel und einer das Ritzel umfassenden Ritzelwelle (3), wobei die Ritzelwelle (3) auf der einen Seite des Ritzels in einem Festlager (5) gelagert ist, das eine Schwenkachse (6) für die Ritzelwelle (3) ausbildet, die quer zur Längsachse (17) der Ritzelwelle (3) liegt, **dadurch gekennzeichnet, dass** das Festlager (5) gemäß einem der vorhergehenden Ansprüche ausgebildet ist.

## Claims

1. Fixed bearing (5) for a steering gear having a rotary bearing which comprises an inner bearing shell which is provided for receiving a pinion shaft (3) of the steering gear, and an outer bearing shell which is accommodated in a bearing bushing (12), and having a pivoting ring (13) which has an outer ring (14) and an inner ring (15) which are pivotably connected via one or more torsion webs (16), wherein the outer ring (14) is provided for supporting the fixed bearing (5) in a housing (1) of the steering gear, **characterized in that** the inner ring (15) of the pivoting ring (13) is mounted and axially secured on the outside of the bearing bushing (12).

2. Fixed bearing (5) according to Claim 1, **characterized in that** the bearing bushing (12) has a first longitudinal section and a second longitudinal section, wherein the second longitudinal section has a smaller outer diameter and inner diameter than the first longitudinal section, with the result that a stop is formed both on the outside and on the inside between the first and second longitudinal sections, wherein the rotary bearing bears on the inner stop, and the pivoting ring (13) bears on the outer stop.

3. Fixed bearing (5) according to Claim 1 or 2, **characterized in that** the bearing bushing (12) is embodied in a tubular shape with a constant wall thickness.

4. Fixed bearing (5) according to one of the preceding claims, **characterized in that** a free end of the bearing bushing (12) is shaped radially inward in order to form an inner collar which forms a stop for the rotary bearing.

5. Fixed bearing (5) according to one of the preceding claims, **characterized in that** a free end of the bearing bushing (12) is shaped radially outward in order to form an outer collar which forms a stop for the pivoting ring (13).

6. Fixed bearing (5) according to Claim 5, **characterized by** an annular washer which is arranged between the pivoting ring (13) and the outer collar.

7. Fixed bearing (5) according to Claim 5 or 6, **characterized in that** the pivoting ring (13) and/or the annular washer have a projection and/or a depression (19) which form a positively locking anti-rotation means with the outer collar.

8. Steering gear having a gear wheel (2), a pinion which meshes therewith and a pinion shaft (3) which comprises the pinion, wherein the pinion shaft (3) is mounted on the one side of the pinion in a fixed bearing (5) which forms a pivoting axis (6) for the pinion shaft (3) which is located transversely with respect to the longitudinal axis (17) of the pinion shaft (3), **characterized in that** the fixed bearing (5) is embodied according to one of the preceding claims.

## Revendications

1. Palier fixe (5) pour un mécanisme de direction comprenant un palier pivotant qui comprend une coque de palier interne qui est prévue pour recevoir un arbre de pignon (3) du mécanisme de direction et une coque de palier externe qui est reçue dans une douille-palier (12), ainsi qu'une bague pivotante (13) qui présente une bague externe (14) ainsi qu'une bague interne (15) qui sont connectées de manière pivotante par le biais d'une ou plusieurs, nervures de torsion (16), la bague externe (14) étant prévue pour le support du palier fixe (5) dans un boîtier (1) du mécanisme de direction, **caractérisé en ce que** la bague interne (15) de la bague pivotante (13) est supportée et fixée axialement du côté extérieur sur la douille-palier (12).

2. Palier fixe (5) selon la revendication 1, **caractérisé en ce que** la douille-palier (12) présente une première portion longitudinale et une deuxième portion longitudinale, la deuxième portion longitudinale présentant un plus petit diamètre extérieur et un plus petit diamètre intérieur de la première portion longitudinale de telle sorte qu'une butée soit réalisée entre la première et la deuxième portion longitudinale à la fois du côté intérieur et du côté extérieur, le palier pivotant s'appliquant contre la butée du côté intérieur et la bague pivotante (13) s'appliquant contre la butée du côté extérieur.

3. Palier fixe (5) selon la revendication 1 ou 2, **caractérisé en ce que** la douille-palier (12) est réalisée sous forme tubulaire avec une épaisseur de paroi constante.

4. Palier fixe (5) selon l'une quelconque des revendications précédentes, **caractérisé en ce qu'**une extrémité libre de la douille-palier (12) est formée radialement vers l'intérieur afin de constituer un rebord intérieur qui constitue une butée pour le palier pivotant.

5. Palier fixe (5) selon l'une quelconque des revendications précédentes, **caractérisé en ce qu'**une extrémité libre de la douille-palier (12) est formée radialement vers l'extérieur afin de constituer un rebord extérieur qui constitue une butée pour la bague pivotante (13).

6. Palier fixe (5) selon la revendication 5, **caractérisé par** une rondelle annulaire disposée entre la bague pivotante (13) et le rebord extérieur.

7. Palier fixe (5) selon la revendication 5 ou 6, **caractérisé en ce que** la bague pivotante (13) et/ou la rondelle annulaire présentent une saillie et/ou un renfoncement (19) qui constituent avec le rebord extérieur une fixation par engagement par correspondance de formes contre la rotation.

8. Mécanisme de direction comprenant une roue dentée (2), un pignon s'engrenant avec celle-ci et un arbre de pignon (3) comprenant le pignon, l'arbre de pignon (3) étant supporté sur l'un des côtés du pignon dans un palier fixe (5) qui constitue un axe de pivotement (6) pour l'arbre de palier (3) qui est situé transversalement à l'axe longitudinal (17) de l'arbre de pignon (3), **caractérisé en ce que** le palier fixe (5) est réalisé selon l'une quelconque des revendications précédentes.
